# EUROPEAN PATENT SPECIFICATION

(11) **EP 4 589 935 B1**
(45) Date of publication and mention of the grant of the patent: **18.11.2026**
(21) Application number: 23890366.0
(22) Date of filing: 07.09.2023
(51) Int. Cl.: H04M 1/02, H04N 23/54, H04N 23/55, H04N 23/57, H04N 23/52

(54) **ELECTRONIC DEVICE**
ELEKTRONISCHE VORRICHTUNG
DISPOSITIF ÉLECTRONIQUE

(30) Priority: 16.11.2022 CN 202211459143
(43) Date of publication of application: 23.07.2025
(73) Proprietor: Honor Device Co., Ltd., Shenzhen, Guangdong 518040 (CN)
(72) Inventor: FU, Zhenbiao, Shenzhen, Guangdong 518040 (CN); DI, Xijian, Shenzhen, Guangdong 518040 (CN); ZHAO, Yaru, Shenzhen, Guangdong 518040 (CN); MA, Zhe, Shenzhen, Guangdong 518040 (CN)
(74) Representative: Goddar, Heinz J.
(86) International application number: PCT/CN2023/117586
(87) International publication number: WO 2024/103929

(56) References cited:
- CN-A- 101 325 231
- CN-A- 107 948 468
- CN-A- 112 291 398
- CN-A- 113 114 825
- JP-A- 2004 120 670
- KR-A- 20180 060 735

## Description

### TECHNICAL FIELD

This application relates to the field of electronic device technologies, and in particular, to an electronic device.

### BACKGROUND

With the continuous development of science and technology, a mobile phone and other electronic devices are widely used in people's daily life and work, and have become indispensable daily necessities for people. Currently, in pursuit of exquisite appearance and ease of use, electronic devices are developing towards being light and thin. However, an electronic device with a lightening and thinning design is very likely to deform under an external force, causing a front camera module of the electronic device to be squeezed. This can easily cause a failure of the front camera module.

CN 113 114 825 A discloses electronic equipment, and belongs to the technical field of communication equipment. The electronic equipment comprises a first shell and a second shell, wherein the first shell is provided with an accommodating space; the camera module is mounted in the accommodating space; and the second shell is connected to the first shell, and the second shell is abutted against the camera module so as to fix the camera module in the accommodating space. According to the scheme, the lightness and thinness of the electronic equipment can be optimized.

### SUMMARY

This application provides an electronic device, configured to prevent the electronic device from deforming under an external force and causing a front camera module to be squeezed, to ensure operational reliability of the electronic device.

According to a first aspect, this application provides an electronic device, including a housing, a front camera module, and a bracket. The housing includes a back cover, the front camera module and the bracket are both disposed on the housing, and the bracket is disposed between the back cover and the front camera module. The bracket includes a raised portion, the raised portion is disposed corresponding to the front camera module and raises in a direction facing away from the camera module. The raised portion is provided with a slot, and the slot is communicated with an inner side and an outer side of the raised portion.

It should be noted that one being disposed corresponding to the other means that a vertical projection of one on the other at least partially covers the other. For example, that the raised portion is disposed corresponding to an image sensor means that a vertical projection of the raised portion on the front camera module is at least partially located within the front camera module, or a vertical projection of the front camera module on the raised portion is at least partially located within the raised portion.

It may be understood that when being squeezed by an external force, the back cover is very likely to deform and sink toward an inner side of a middle frame, causing internal components or modules of the electronic device to be squeezed. When the back cover is squeezed by an external force at a position corresponding to the front camera module, the external force borne by the back cover may first act on the bracket, and then act on the front camera module via the bracket.

In this application, the bracket includes the raised portion, and the raised portion is disposed corresponding to the front camera module. When the back cover is squeezed by an external force to deform, causing the bracket to be squeezed, the external force may first act on the raised portion to cause elastic deformation of the raised portion. In this case, stress applied to the raised portion may be released to other portions of the bracket via the raised portion. This can avoid directly acting on the front camera module and causing a failure of the front camera module. In addition, because the raised portion is provided with a slot, the stress applied to the raised portion may be evenly transferred to other portions of the bracket instead of being concentrated on a periphery of the raised portion. When stress applied to the back cover is removed, the elastic deformation of the raised portion may be recovered. When the back cover is squeezed next time, the raised portion can still resist the external force, to protect the front camera module and avoid damage to the front camera module.

In an implementation, the front camera module includes the image sensor, and the image sensor is disposed corresponding to the raised portion.

It should be understood that the image sensor is a member of the front camera module close to the bracket, and is a component most likely to fail due to the external force. Therefore, to avoid failure of the front camera module due to the external force on the back cover, the image sensor needs to be protected first. In this application, the bracket includes the raised portion, and the raised portion is disposed corresponding to the image sensor. When the back cover is squeezed by an external force to deform, causing the bracket to be squeezed, the external force may first act on the raised portion to cause elastic deformation of the raised portion. In this case, stress applied to the raised portion may be released to other portions of the bracket via the raised portion. This can avoid directly acting on the front camera module and causing a failure of the front camera module. In addition, because the raised portion is provided with a slot, the stress applied to the raised portion may be evenly transferred to other portions of the bracket instead of being concentrated on a periphery of the raised portion. When stress applied to the back cover is removed, the elastic deformation of the raised portion may be recovered. When the back cover is squeezed next time, the raised portion can still resist the external force, to protect the image sensor and avoid damage to the image sensor.

In an implementation, a projection of the image sensor on the bracket is located within the raised portion. When the back cover is squeezed by stress to deform, causing the bracket to be squeezed, regardless of angle the back cover squeezes the bracket, the raised portion may deform to release stress to protect the image sensor, so that all-round protection for the image sensor is achieved.

In an implementation, the bracket further includes a plane portion. The plane portion is disposed around the periphery of the raised portion, and the raised portion raises relative to the plane portion. The plane portion is disposed opposite to the front camera module and abuts against the front camera module to improve assembly stability of the front camera module.

In an implementation, the plane portion includes two support portions. The support portions are respectively located on opposite sides of the slot and extend from an edge of the plane portion in a direction away from the raised portion, and the two support portions both abut against the front camera module. A design of the two support portions increases an abutting area of the plane portion to the front camera module, to facilitate improving assembly stability of the front camera module.

The two support portions are both horn-shaped.

In an implementation, the housing further includes the middle frame. The back cover is disposed on one side of the middle frame, and the front camera module and the bracket are both disposed on the middle frame. The middle frame includes a middle frame antenna, and the bracket includes a metal bracket portion. The metal bracket portion includes the raised portion and the plane portion. The metal bracket portion and the middle frame antenna are spaced apart and disposed opposite to each other to reduce interference of the metal bracket portion on the middle frame antenna and reduce attenuation of signal radiation efficiency of the metal bracket portion on the middle frame antenna.

In an implementation, the front camera module further includes a circuit board assembly. The image sensor is disposed on the circuit board assembly. The circuit board assembly includes a reinforcement plate. The reinforcement plate is disposed opposite to the raised portion. The reinforcement plate is made of a metal material. The slot is provided opposite to the middle frame antenna.

It should be understood that because the reinforcement plate and the raised portion are both made of a metal material, the reinforcement plate, the raised portion, and an air medium between the reinforcement plate and the raised portion may form a local capacitor. The local capacitor may increase attenuation of signal radiation efficiency of the middle frame antenna. In this application, the slot is provided opposite to the middle frame antenna, to reduce a relative area between the raised portion and the reinforcement plate, and reduce an impact of the local capacitor formed by the raised portion and the reinforcement plate on the signal radiation efficiency of the middle frame antenna.

In an implementation, the middle frame antenna is a GPS antenna. A minimum distance between the metal bracket portion and the middle frame antenna is greater than or equal to 3 mm, to reduce interference of the metal bracket portion on a GPS signal and reduce attenuation of radiation efficiency of the metal bracket portion on the GPS signal.

The two support portions are disposed opposite to the middle frame antenna. A minimum distance between the support portions and the middle frame antenna is the minimum distance between the metal bracket portion and the middle frame antenna. In other words, the minimum distance between the support portions and the middle frame antenna is greater than or equal to 3 mm.

In an implementation, a minimum distance between the bottom of the slot and the middle frame antenna is greater than or equal to 3.2 mm, and a width of the slot is greater than or equal to 2.5 mm and less than or equal to 3.5 mm, to reduce attenuation of radiation efficiency of the local capacitor formed by the raised portion and the reinforcement plate on the GPS signal.

In an implementation, the middle frame antenna is an LTE antenna, a GSM antenna, an NR antenna, or a Wi-Fi antenna.

In an implementation, a material of the back cover includes at least one of polyurethane, fur, or glass fiber. In this way, an appearance of the back cover is more exquisite, and a lightening and thinning design of the electronic device can be achieved.

In an implementation, the electronic device further includes a display screen. The display screen is disposed on a side of the middle frame facing away from the back cover. The display screen includes a light-transmissive portion, and an imaging surface of the front camera module is disposed opposite to the light-transmissive portion. The front camera module may collect light passing through the light-transmissive portion and generate corresponding image data. The electronic device may be a bar phone.

In an implementation, a thickness of the electronic device is greater than or equal to 5 mm and less than or equal to 7 mm, to ensure the lightening and thinning design of the electronic device, thereby improving user experience.

In an implementation, the middle frame is provided with a through hole, and the through hole runs through the middle frame in a thickness direction of the middle frame. The electronic device further includes a circuit board. The circuit board is provided with a first avoidance hole, and the first avoidance hole runs through the circuit board in a thickness direction of the circuit board. The circuit board is disposed on the middle frame, and the first avoidance hole is communicated with the through hole.

The front camera module further includes a camera support and a lens. The camera support is disposed on the circuit board assembly. The lens is disposed on a side of the camera support facing away from the circuit board assembly, and the lens passes through the first avoidance hole and the through hole. An imaging surface of the lens is disposed opposite to the light-transmissive portion.

In an implementation, the electronic device includes a first housing, a second housing, and a rotation mechanism. The rotation mechanism is connected between the first housing and the second housing. The first housing includes the back cover, and the front camera module and the bracket are both disposed in the first housing. The electronic device may be a foldable mobile phone.

In an implementation, the electronic device further includes a display screen. The display screen includes a first display portion, a second display portion, and a bendable portion. The bendable portion is fastened between the first display portion and the second display portion. The first display portion is disposed in the first housing. The second display portion is disposed in the second housing. The bendable portion is disposed opposite to the rotation mechanism.

The first display portion includes a light-transmissive portion, and an imaging surface of the front camera module is disposed opposite to the light-transmissive portion. The front camera module may collect light passing through the light-transmissive portion and generate corresponding image data.

In an implementation, a sum of thicknesses of the first housing and the first display portion is greater than or equal to 5 mm and less than or equal to 7 mm, to ensure the lightening and thinning design of the electronic device, thereby improving user experience.

A sum of thicknesses of the second housing and the second display portion may also be greater than or equal to 5 mm and less than or equal to 7 mm. For example, the sum of the thicknesses of the first housing and the first display portion and the sum of the thicknesses of the second housing and the second display portion may both be 6.3 mm.

### BRIEF DESCRIPTION OF DRAWINGS

To describe the technical solutions in embodiments of this application more clearly, the following describes the accompanying drawings required for describing embodiments of this application.
FIG. 1 is a schematic diagram of a structure of an electronic device according to an embodiment of this application;
FIG. 2 is a schematic diagram of a structure of the electronic device shown in FIG. 1 from another angle;
FIG. 3 is a schematic diagram of a partial structure of the electronic device shown in FIG. 2;
FIG. 4 is a schematic diagram of a breakdown structure of the electronic device shown in FIG. 3;
FIG. 5 is a schematic diagram of a structure of a middle frame of the electronic device shown in FIG. 4;
FIG. 6 is a schematic diagram of a structure of a circuit board of the electronic device shown in FIG. 4;
FIG. 7 is a schematic diagram of a structure of a front camera module of the electronic device shown in FIG. 4 from another angle;
FIG. 8 is a schematic diagram of a breakdown structure of the front camera module shown in FIG. 7;
FIG. 9 is a schematic diagram of an assembly structure of the middle frame, the circuit board, and the front camera module of the electronic device shown in FIG. 4;
FIG. 10 is a schematic diagram of a cross-sectional structure of the electronic device shown in FIG. 3 sectioned along I-I;
FIG. 11 is a schematic diagram of a structure of a bracket of the electronic device shown in FIG. 4;
FIG. 12 is a schematic diagram of a partial structure of the bracket shown in FIG. 11;
FIG. 13 is a schematic diagram of an assembly structure of the middle frame, the circuit board, the bracket, and the front camera module of the electronic device shown in FIG. 4;
FIG. 14 is a schematic diagram of a partial structure of a bracket shown in a first design scheme;
FIG. 15 is a schematic diagram of a partial structure of a bracket shown in a second design scheme;
FIG. 16 is a schematic diagram of a partial structure of a bracket shown in a third design scheme;
FIG. 17 is a diagram of a simulation result of stress borne by an image sensor in a front camera module when the bracket shown in the first design scheme is used in an electronic device;
FIG. 18 is a diagram of a simulation result of stress borne by an image sensor in a front camera module when the bracket shown in the second design scheme is used in an electronic device;
FIG. 19 is a diagram of a simulation result of stress borne by an image sensor in a front camera module when the bracket shown in the third design scheme is used in an electronic device;
FIG. 20 is a diagram of a simulation result of stress borne by an image sensor in a front camera module when a bracket shown in a fourth design scheme is used in an electronic device;
FIG. 21 is a schematic diagram of a partial structure of the assembly structure shown in FIG. 13;
FIG. 22 is a schematic diagram of an assembly structure of a bracket and a middle frame shown in a first experimental scheme;
FIG. 23 is a schematic diagram of an assembly structure of a bracket and a middle frame shown in a second experimental scheme;
FIG. 24 is a schematic diagram of an assembly structure of a bracket and a middle frame shown in a third experimental scheme;
FIG. 25 is a schematic diagram of an assembly structure of a bracket and a middle frame shown in a fourth experimental scheme;
FIG. 26 is a schematic diagram of an assembly structure of a bracket and a middle frame shown in a fifth experimental scheme;
FIG. 27 is a schematic diagram of an assembly structure of a bracket and a middle frame shown in a sixth experimental scheme; and
FIG. 28 is a diagram of efficiency curves of a middle frame antenna when the brackets shown in the six experimental schemes are used in an electronic device.

### DESCRIPTION OF EMBODIMENTS

The following clearly and completely describes the technical solutions in embodiments of this application with reference to the accompanying drawings in embodiments of this application.

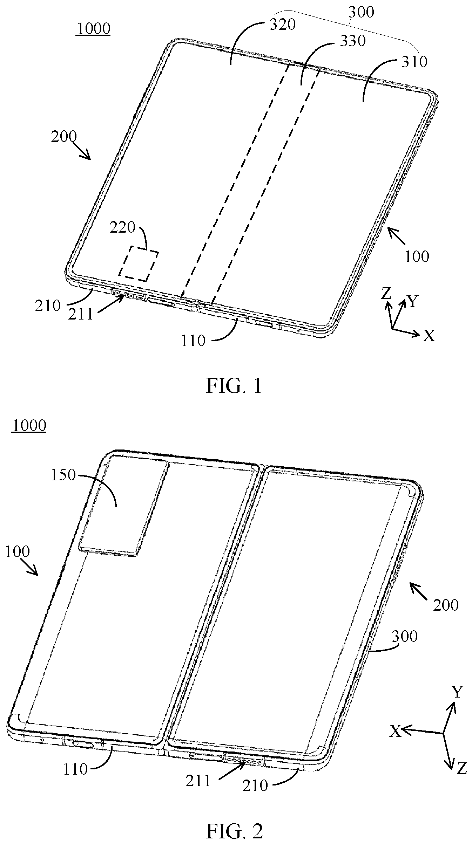

Refer to FIG. 1 and FIG. 2. FIG. 1 is a schematic diagram of a structure of an electronic device 1000 according to an embodiment of this application, and FIG. 2 is a schematic diagram of a structure of the electronic device 1000 shown in FIG. 1 from another angle.

The electronic device 1000 may be a mobile phone, a tablet computer, a notebook computer, in-vehicle infotainment, a smart watch, a smart bracelet, a POS terminal (point of sales terminal, point of sales terminal), or another electronic product. In this embodiment, the electronic device 1000 may be a foldable mobile phone. To be specific, the electronic device 1000 is a mobile phone that may be switched between a folded state and an unfolded state.

Next, for ease of description, a width direction of the electronic device 1000 is defined as an X-axis direction, a length direction of the electronic device 1000 is defined as a Y-axis direction, and a thickness direction of the electronic device 1000 is defined as a Z-axis direction. The X-axis direction, the Y-axis direction, and the Z-axis direction are perpendicular to each other. The X-axis direction and the Y-axis direction form an XY plane, the X-axis direction and the Z-axis direction form an XZ plane, and the Y-axis direction and the Z-axis direction form a YZ plane.

In this embodiment, an extension direction of a rotation axis of the electronic device 1000 is the Y-axis direction. In other words, the electronic device 1000 may be relatively unfolded or relatively folded around the Y-axis direction. The electronic device 1000 shown in FIG. 1 and FIG. 2 is in the unfolded state. A size of the electronic device 1000 in the X-axis direction is relatively large, and the electronic device 1000 has a relatively large display area. For example, an unfolding angle of the electronic device 1000 shown in FIG. 1 and FIG. 2 is 180 degrees. In other words, the electronic device 1000 shown in FIG. 2 is in a flattened state. The electronic device 1000 may be in the folded state. The size of the electronic device 1000 in the X-axis direction is relatively small, so that the electronic device 1000 is easy to carry.

It should be noted that a slight deviation is allowed for all angles described by using an example in this embodiment of this application. For example, that the unfolding angle of the electronic device 1000 shown in FIG. 1 and FIG. 2 is 180 degrees means that the unfolding angle may be 180 degrees, or approximately 180 degrees, such as 170 degrees, 175 degrees, 185 degrees, or 190 degrees. Degrees in examples for description below may be understood in a same way.

It should be understood that the electronic device 1000 shown in this embodiment of this application is an electronic product that may be folded once. In some other embodiments, the electronic device 1000 may alternatively be an electronic product that may be folded for a plurality of times (twice or more). In this case, the electronic device 1000 may include a plurality of parts. Two adjacent parts may be folded relatively close to each other until the electronic device 1000 is in the folded state, and the two adjacent parts may be unfolded relatively far away from each other until the electronic device 1000 is in the unfolded state.

In this embodiment, the electronic device 1000 includes a first main body 100, a second main body 200, a rotation mechanism (not shown), and a display screen 300. The rotation mechanism is connected between the first main body 100 and the second main body 200, so that the first main body 100 is rotatably connected to the second main body 200. A thickness of the electronic device 1000 may be between 5 mm and 7 mm. For example, the thickness of the electronic device 1000 may be 6.3 mm. It should be understood that, the thickness of the electronic device 1000 shown in this embodiment of this application is a thickness of the electronic device 1000 in the Z-axis direction when the electronic device 1000 is in the flattened state.

The display screen 300 includes a first display portion 310, a second display portion 320, and a bendable portion 330. The bendable portion 330 is connected between the first display portion 310 and the second display portion 320 and may be bent around the Y-axis direction. Specifically, the first display portion 310 is disposed on the first main body 100, the second display portion 320 is disposed on the second main body 200, and the bendable portion 330 is disposed opposite to the rotation mechanism. A sum of thicknesses of the first display portion 310 and the first main body 100 and a sum of thicknesses of the second display portion 320 and the second main body 200 may both be between 5 mm and 7 mm. For example, the sum of the thicknesses of the first display portion 310 and the first main body 100 and the sum of the thicknesses of the second display portion 320 and the second main body 200 may both be 6.3 mm.

The first main body 100 and the second main body 200 may rotate relative to each other via the rotation mechanism, so that the electronic device 1000 can be switched between the folded state and the unfolded state. Specifically, the first main body 100 and the second main body 200 may rotate relative to each other to be disposed opposite to each other, so that the electronic device 1000 is in the folded state. In this case, the first display portion 310 and the second display portion 320 are disposed opposite to each other, and the bendable portion 330 is bent. In this case, the display screen 300 is in a folded state, and an exposed area of the display screen 300 is small, so that a probability that the display screen 300 is damaged is greatly reduced, thereby effectively protecting the display screen 300.

The first main body 100 and the second main body 200 may alternatively be relatively rotated to be relatively unfolded, so that the electronic device 1000 is in the unfolded state, as shown in FIG. 1 and FIG. 2. For example, the electronic device 1000 shown in FIG. 1 and FIG. 2 is in the flattened state, and an included angle between the first main body 100 and the second main body 200 is 180 degrees. In this case, the first display portion 310 and the second display portion 320 are relatively unfolded, and the bendable portion 330 is not bent but flattened. In this case, the display screen 300 is in a flattened state, and an included angle between the first display portion 310 and the bendable portion 330 and an included angle between the second display portion 320 and the bendable portion 330 are both 180 degrees. The display screen 300 has a large display region, so that a large-screen display of the electronic device 1000 can be implemented, thereby improving user's use experience.

It should be understood that, the electronic device 1000 shown in this embodiment of this application is folded in an inward folding manner, and the display screen 300 of the electronic device 1000 in the folded state is located on an inner side of the first main body 100 and the second main body 200. In some other embodiments, the electronic device 1000 may alternatively be folded in an outward folding manner. In this case, the display screen 300 of the electronic device 1000 in the folded state is located on an outer side of the first main body 100 and the second main body 200.

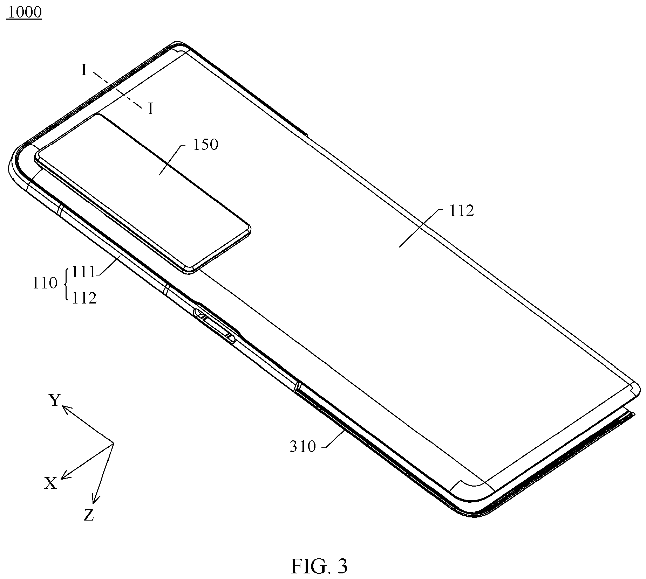

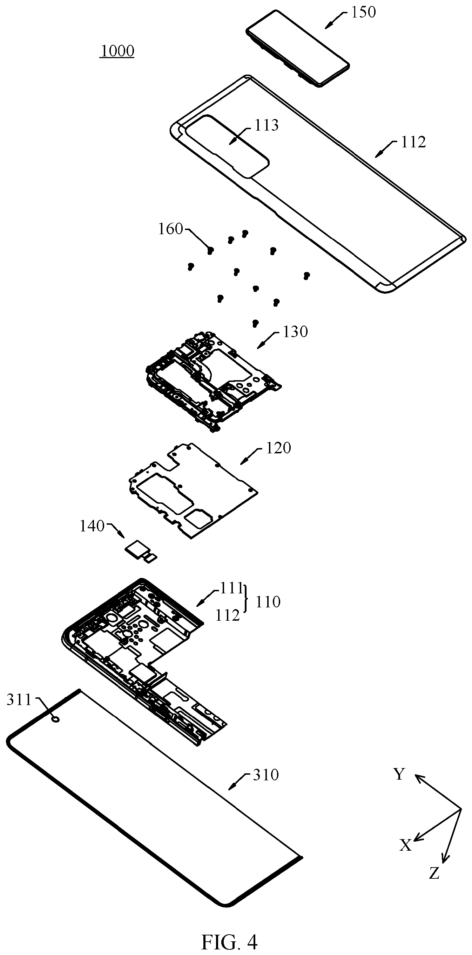

Further refer to FIG. 3 and FIG. 4. FIG. 3 is a schematic diagram of a partial structure of the electronic device 1000 shown in FIG. 2, and FIG. 4 is a schematic diagram of a breakdown structure of the electronic device 1000 shown in FIG. 3. FIG. 3 shows only the first main body 100 and the first display portion 310.

The first main body 100 includes a first housing 110, a circuit board 120, a processor (not shown), a bracket 130, a front camera module 140, and a back camera module 150. The circuit board 120, the processor, the bracket 130, the front camera module 140, and the back camera module 150 are all disposed in the first housing 110. The processor may be disposed on the circuit board 120 and may be electrically connected to the circuit board 120. The processor may be a CPU (central processing unit, central processing unit) of the electronic device 1000. The front camera module 140 and the back camera module 150 are both located on the top of the first main body 100 and are both electrically connected to the processor. An imaging surface of the front camera module 140 faces the first display portion 310. The front camera module 140 may receive an information collection signal sent by the processor, collect, based on the information collection signal, light passing through the first display portion 310, and generate corresponding image data. An imaging surface of the back camera module 150 is exposed relative to the first housing 110. The back camera module 150 may receive an information collection signal sent by the processor, collect, based on the information collection signal, light on an outer side the first housing 110, and generate corresponding image data.

It should be noted that in some other embodiments, the electronic device 1000 may alternatively not be a foldable mobile phone. For example, the electronic device 1000 may be a bar phone. In this case, the electronic device 1000 includes a main body and a display screen. The display screen is disposed on the main body. The main body includes a housing, a front camera module, and a bracket. The front camera module and the bracket are both disposed on the housing. For a basic structure of the main body, a basic structure of the display screen, and a fitting relationship between the main body and the display screen, reference may be made to related designs of the first main body 100 and the first display portion 310 below, and details are not described below.

Refer to FIG. 1 and FIG. 2. The second main body 200 includes a second housing 210 and a speaker module 220. The speaker module 220 is disposed on the second housing 210. The rotation mechanism is connected between the first housing 110 and the second housing 210. The second housing 210 is provided with a speaker hole 211. The speaker hole 211 is communicated with an inner side and an outer side of the second housing 210. For example, there are a plurality of speaker holes 211, and the plurality of speaker holes 211 are arranged at intervals in the X-axis direction. In some other embodiments, there may be one speaker hole 211. A quantity of speaker holes 211 is not specifically limited in embodiments of this application. The speaker module 220 is located on the bottom of the second main body 200 and is used as a bottom speaker module of the electronic device 1000. The speaker module 220 is electrically connected to the processor. The speaker module 220 may receive an audio signal sent by the processor and vibrate to produce a sound based on the audio signal. The sound may be diffused into an external environment through the speaker hole 211, so that the electronic device can produce a sound.

It should be noted that the directional terms such as "top", "bottom", "up", "down", "left", and "right" in this application are described with reference to the orientations shown in FIG. 1 and FIG. 2. A direction facing a positive direction of the Y-axis is "top", a direction facing a negative direction of the Y-axis is "bottom", a direction facing a positive direction of the Z-axis is "up", a direction facing a negative direction of the Z-axis is "down", a direction facing a positive direction of the X-axis is "right", and a direction facing a negative direction of the X-axis is "left". This does not indicate or imply that the referred device or element needs to have a specific orientation and be constructed and operated in a specific orientation, and therefore should not be understood as a limitation on this application.

It should be noted that in recent years, ultra-thin structures and diversified appearances have become a development trend of electronic devices. However, an ultra-thin structure and easily deformed back cover pose a great challenge to an internal structure design and component module protection of the electronic device. In particular, a bottleneck location such as the front camera module is very likely to fail due to external squeeze, reducing operational reliability of the electronic device.

Refer to FIG. 3 and FIG. 4. FIG. 3 is a schematic diagram of a partial structure of the electronic device 1000 shown in FIG. 2, and FIG. 4 is a schematic diagram of a breakdown structure of the electronic device 1000 shown in FIG. 3. FIG. 3 shows only the first main body 100 of the electronic device 1000 and the first display portion 310 of the display screen 300.

The first housing 110 includes a middle frame 111 and a back cover 112. The back cover 112 is disposed on one side of the middle frame 111. For example, the back cover 112 may be detachably disposed on the middle frame 111 to facilitate repair and replacement of components or modules in the first main body 100. A material of the back cover 112 includes at least one of PU (polyurethane, polyurethane), fur, or glass fiber. In this way, an appearance of the back cover 112 is more exquisite, and a lightening and thinning design of the electronic device 1000 can be achieved. It may be understood that because the PU, the fur, and the glass fiber are all materials easily deformed, when a user uses the electronic device 1000, a foreign object such as a finger may easily press on the back cover 112, causing the back cover 112 to deform, and causing internal components or modules of the first main body 100 to be squeezed. In some other embodiments, the material of the back cover 112 may alternatively include a material not easily deformed, such as glass or metal. The material of the back cover 112 is not specifically limited in embodiments of this application.

In this embodiment, the back cover 112 may be a battery cover of the electronic device 1000. The back cover 112 is provided with a camera hole 113. The camera hole 113 is located on the top of the back cover 112 and is communicated with an inner side and an outer side of the first housing 110. An opening of the camera hole 113 is located on an upper surface (not shown) of the back cover 112. The camera hole 113 is recessed from the upper surface of the back cover 112 in a direction (in a direction) (a negative direction of a Z-axis in the figure) toward a lower surface of the back cover 112, and runs through the lower surface of the back cover 112. In other words, the camera hole 113 runs through the back cover 112 in a thickness direction (a Z-axis direction in the figure) of the back cover 112. For example, the camera hole 113 is a square hole. In some other embodiments, the camera hole 113 may alternatively be a circular hole or a hole of another shape.

The first display portion 310 is disposed on the other side of the middle frame 111. To be specific, the first display portion 310 is disposed on a side of the middle frame 111 facing away from the back cover 112. In other words, the back cover 112 and the first display portion 310 are respectively disposed on opposite sides of the middle frame 111. When the user uses the electronic device, the first display portion 310 is placed toward the user, and the back cover 112 is placed facing away from the user. In this embodiment, the first display portion 310 includes a light-transmissive portion 311. The light-transmissive portion 311 is located on the top of the first display portion 310. Light from the external environment may pass through the light-transmissive portion 311 and enter the first housing 110.

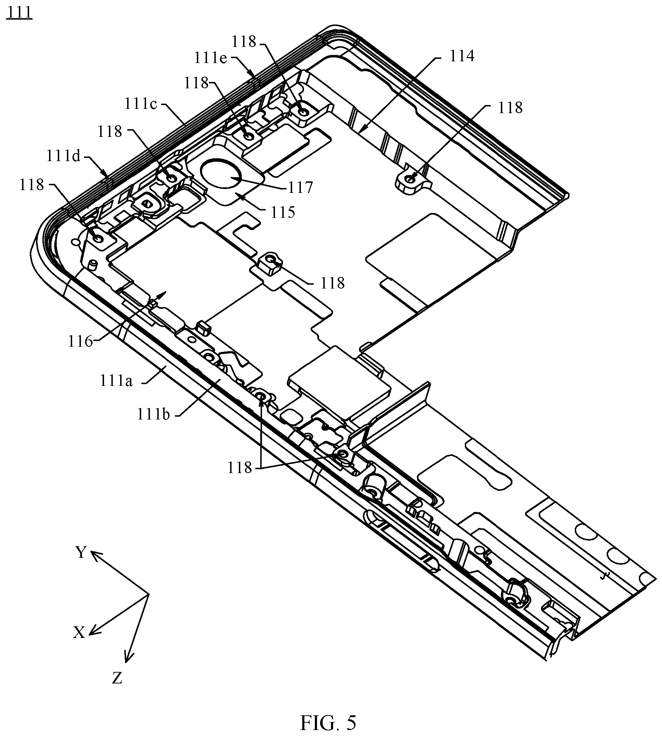

Refer to FIG. 4 and FIG. 5. FIG. 5 is a schematic diagram of a structure of the middle frame 111 of the electronic device 1000 shown in FIG. 4.

The middle frame 111 is provided with a first mounting recess 114, a second mounting recess 115, a third mounting recess 116, a through hole 117, and a plurality of fixing holes 118. An opening of the first mounting recess 114 is located on a lower surface (not marked) of the middle frame 111. The first mounting recess 114 is recessed from the lower surface of the middle frame 111 in a direction (a positive direction of a Z-axis in the figure) toward an upper surface (not marked) of the middle frame 111. Openings of the second mounting recess 115 and the third mounting recess 116 are both located on a recess bottom wall (not marked) of the first mounting recess 114. The second mounting recess 115 and the third mounting recess 116 are both recessed from the recess bottom wall of the first mounting recess 114 toward the upper surface of the middle frame 111 (in the positive direction of the Z-axis in the figure). The second mounting recess 115 is located on the top of the first mounting recess 114, and the third mounting recess 116 is located on a right side of the first mounting recess 114 and is spaced apart from the second mounting recess 115. An opening of the through hole 117 is located on a recess bottom wall of the second mounting recess 115. The through hole 117 is recessed from the recess bottom wall of the second mounting recess 115 toward the upper surface of the middle frame 111 (in the positive direction of the Z-axis in the figure), and runs through the upper surface of the middle frame 111. For example, the through hole 117 is a circular hole. In some other embodiments, the through hole 117 may alternatively be a square hole or a hole of another special shape.

In addition, a plurality of protrusions are protruded from the recess bottom wall (not marked) of the first mounting recess 114, and the plurality of protrusions are arranged at intervals. Each protrusion extends from the recess bottom wall of the first mounting recess 114 toward an opening of the first mounting recess 114 (in the negative direction of the Z-axis in the figure). Specifically, some of the protrusions are arranged at intervals on an edge of the recess bottom wall of the first mounting recess 114, and are fastened to a recess side wall (not marked) of the first mounting recess 114. Some of the protrusions are disposed in the middle of the recess bottom wall of the first mounting recess 114. Each protrusion is provided with at least one fixing hole 118. Specifically, an opening of each fixing hole 118 is located on a lower surface of the protrusion. Each fixing hole 118 is recessed from the lower surface of the protrusion toward the upper surface of the middle frame 111 and runs through the upper surface of the middle frame 111. The plurality of fixing holes 118 are arranged at intervals.

In this embodiment, the middle frame 111 includes a metal middle frame portion 111a and a plastic middle frame portion 111b. The plastic middle frame portion 111b is fastened to an inner side of the metal middle frame portion 111a. For example, the metal middle frame portion 111a and the plastic middle frame portion 111b may be integrally formed by in-mold injection molding. The metal middle frame portion 111a includes a middle frame antenna 111c. The middle frame antenna 111c is located on the top of the metal middle frame portion 111a. A feed point (not shown) of the middle frame antenna 111c is electrically connected to the circuit board 120. A radio frequency signal of the circuit board 120 may be fed into the middle frame antenna 111c from the feed point, and the middle frame antenna 111c may radiate the radio frequency signal to the outside world based on the fed radio frequency signal. Alternatively, the middle frame antenna 111c may receive an external radio frequency signal and transmit the external radio frequency signal from the feed point to the circuit board 120, to implement wireless communication between the electronic device 1000 and the outside world. For example, the middle frame antenna 111c is a GPS (global positioning system, global positioning system) antenna. In some other embodiments, the middle frame antenna 111c may alternatively be an LTE (long term evolution, long term evolution) antenna, a GSM (global system for mobile communications, global system for mobile communications) antenna, an NR (new radio) antenna, or a Wi-Fi antenna.

In addition, the metal middle frame portion 111a is provided with a first notch 111d and a second notch 111e. The first notch 111d and the second notch 111e are both located on the top of the metal middle frame portion 111a. In the Y-axis direction, the first notch 111d and the second notch 111e are respectively located on two opposite sides of the middle frame antenna 111c. Specifically, the first notch 111d and the second notch 111e both run through the upper surface and lower surface of the metal middle frame portion 111a in the Z-axis direction, and also run through a top surface of the metal middle frame portion 111a, so that the middle frame antenna 111c is in a suspended state and is relatively independent from other portions of the metal middle frame portion 111a, to ensure normal use of the middle frame antenna 111c.

A part of the plastic middle frame portion 111b fills the first notch 111d and the second notch 111e, and a part of the plastic middle frame portion 111b is located on an inner side of the metal middle frame portion 111a to fasten the middle frame antenna 111c and the other portions of the metal middle frame portion 111a, so as to ensure stability of an overall structure of the middle frame 111. It may be understood that because the plastic middle frame portion 111b is made of a plastic material, plastic filled in the first notch 111d and the second notch 111e may not affect radiation performance of the middle frame antenna 111c.

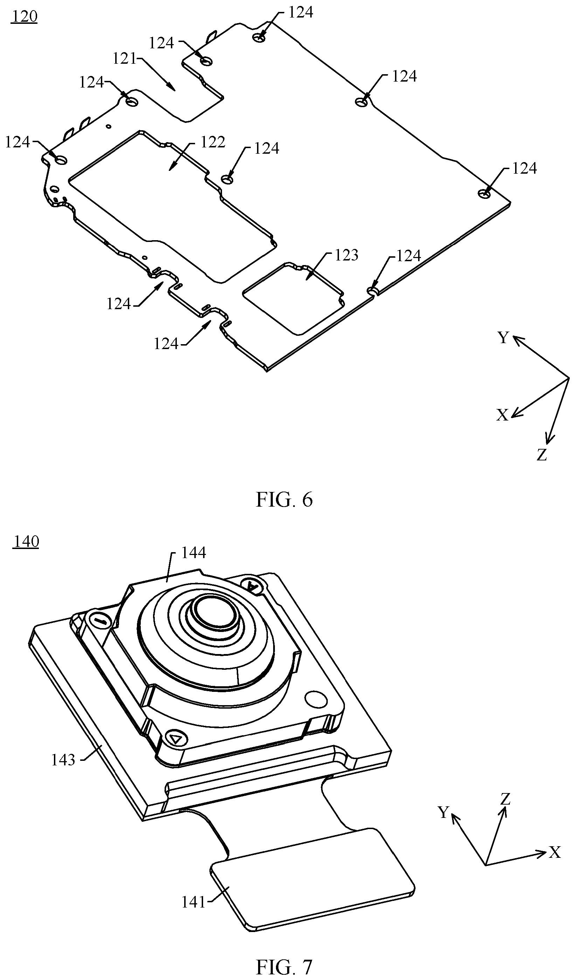

Refer to FIG. 4 and FIG. 6. FIG. 6 is a schematic diagram of a structure of the circuit board 120 of the electronic device 1000 shown in FIG. 4.

The circuit board 120 may be a main board (main board) of the electronic device 1000. The circuit board 120 is provided with a first avoidance hole 121, a second avoidance hole 122, a third avoidance hole 123, and a plurality of mounting holes 124. The first avoidance hole 121, the second avoidance hole 122, the third avoidance hole 123, and the plurality of mounting holes 124 all run through the circuit board 120 in a thickness direction (a Z-axis direction in the figure) of the circuit board 120. Specifically, the first avoidance hole 121 is located on the top of the circuit board 120 and runs through a top surface of the circuit board 120. The second avoidance hole 122 and the third avoidance hole 123 are both located on a right side of the circuit board 120 and are spaced apart from each other in a Y-axis direction. Some of the mounting holes 124 are located on an edge of the circuit board 120, and some of the mounting holes 124 are located in the middle of the circuit board 120. The first avoidance hole 121, the second avoidance hole 122, the third avoidance hole 123, and the plurality of mounting holes 124 are arranged at intervals.

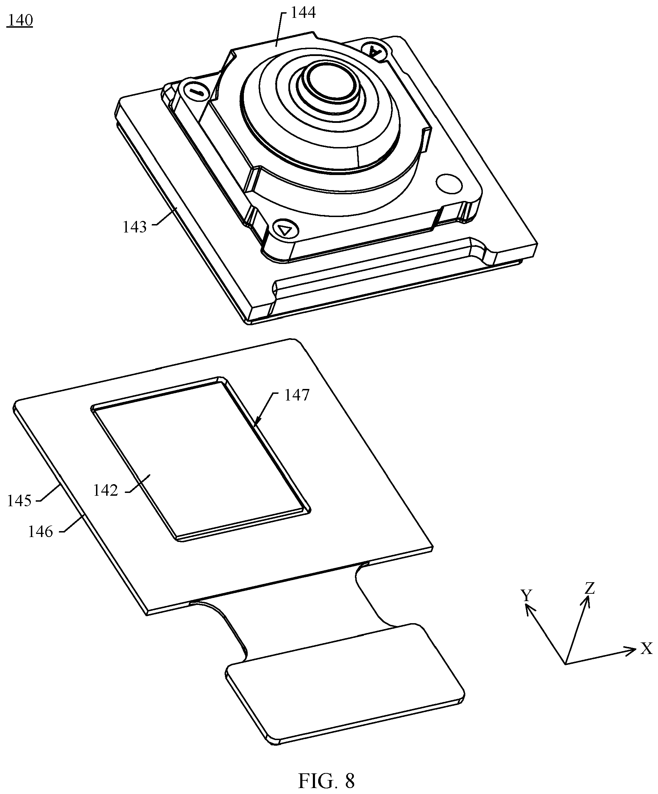

Refer to FIG. 7 and FIG. 8. FIG. 7 is a schematic diagram of a structure of the front camera module 140 of the electronic device 1000 shown in FIG. 4 from another angle, and FIG. 8 is a schematic diagram of a breakdown structure of the front camera module 140 shown in FIG. 7.

The front camera module 140 includes a circuit board assembly 141, an image sensor 142, a camera support 143, and a lens 144. The image sensor 142 and the camera support 143 are both disposed on the circuit board assembly 141, and the lens 144 is disposed on the camera support 143. The circuit board assembly 141 includes a reinforcement plate 145 and a circuit board 146. The circuit board 146 is disposed on an upper surface (not marked) of the reinforcement plate 145. The reinforcement plate 145 is made of a metal material. For example, the reinforcement plate 145 is a steel sheet to increase strength of the circuit board assembly 141. The circuit board 146 is provided with a mounting recess 147. The mounting recess 147 is located in the middle of the circuit board 146. An opening of the mounting recess 147 is located on an upper surface (not marked) of the circuit board 146. The mounting recess 147 is recessed from the upper surface of the circuit board 146 in a direction (a positive direction of a Z-axis in the figure) toward a lower surface (not marked) of the circuit board 146. The mounting recess 147 runs through the lower surface of the circuit board 146. In some other embodiments, the mounting recess 147 may alternatively not run through the lower surface of the circuit board 146.

The image sensor 142 is disposed in the mounting recess 147, and the camera support 143 is disposed on the upper surface of the circuit board 146 and surrounds the image sensor 142. The lens 144 is disposed on a side of the camera support 143 facing away from the circuit board 146. The lens 144 may converge external light, and converged external light may be projected to the image sensor 142 through the camera support 143 to form a corresponding image on the image sensor 142. The lens 144 may include a lens barrel and a lens group fixed inside the lens barrel. For example, there may be a plurality of lenses in the lens group, such as five lenses, six lenses, seven lenses, or eight lenses.

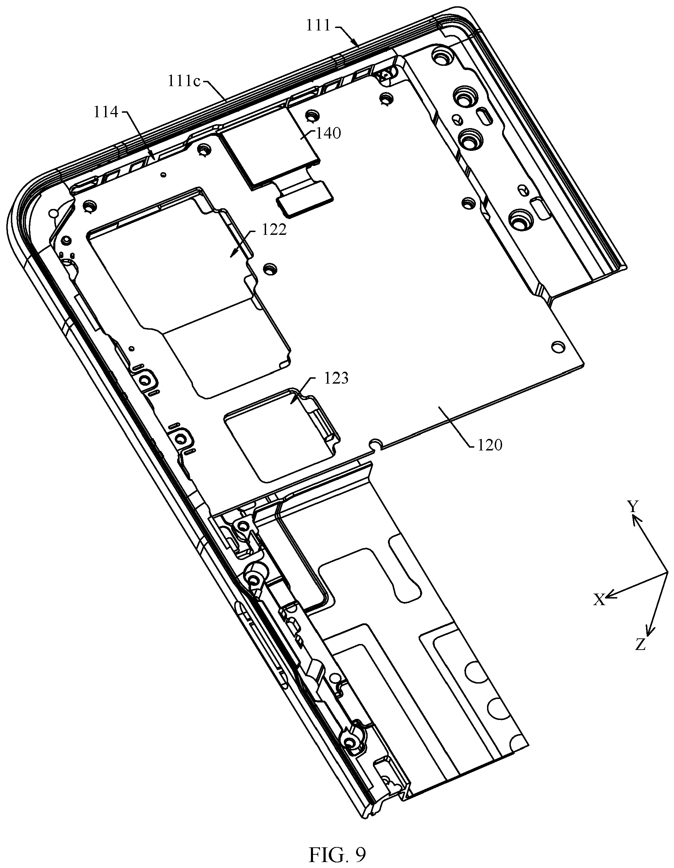

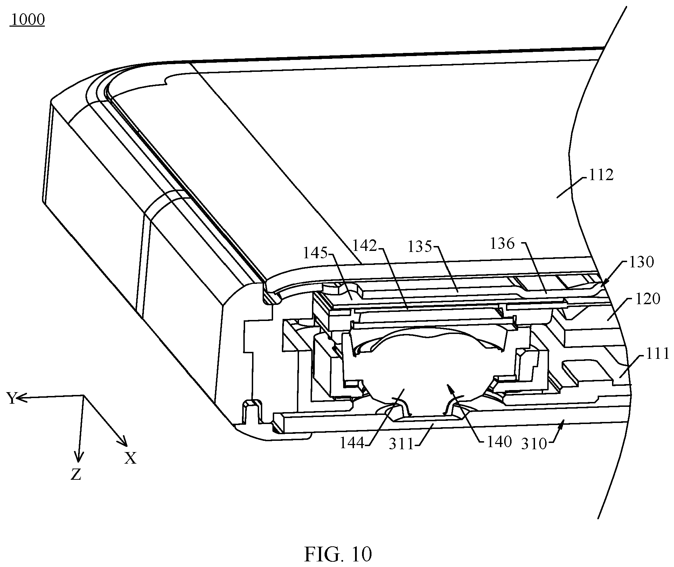

Refer to FIG. 5, FIG. 6, FIG. 9, and FIG. 10. FIG. 9 is a schematic diagram of an assembly structure of the middle frame 111, the circuit board 120, and the front camera module 140 of the electronic device 1000 shown in FIG. 4, and FIG. 10 is a schematic diagram of a cross-sectional structure of the electronic device 1000 shown in FIG. 3 sectioned along I-I. Being "sectioned along I-I" refers to being sectioned along a plane where an I-I line is located.

The circuit board 120 is disposed in the first mounting recess 114, and the front camera module 140 is disposed in the second mounting recess 115. Specifically, the circuit board 120 is disposed on the recess bottom wall of the first mounting recess 114. The first avoidance hole 121 is communicated with the second mounting recess 115, the second avoidance hole 122 and the third avoidance hole 123 are communicated with the third mounting recess 116, and each mounting hole 124 of the circuit board 120 is communicated with one fixing hole 118.

The front camera module 140 is disposed on the recess bottom wall of the second mounting recess 115 and is electrically connected to the circuit board 120 to implement electrical connection to the processor via the circuit board 120. In this embodiment, the front camera module 140 passes through the first avoidance hole 121 of the circuit board 120 and the through hole 117 of the middle frame 111, and is spaced apart from and arranged opposite to the middle frame antenna 111c. Specifically, the circuit board 146 of the circuit board assembly 141 is electrically connected to the circuit board 120. The lens 144 passes through the first avoidance hole 121 of the circuit board 120, is disposed on the recess bottom wall of the second mounting recess 115, and passes through the through hole 117 of the middle frame 111. An imaging surface of the lens 144 protrudes relative to the upper surface of the middle frame 111 and is disposed opposite to the light-transmissive portion 311 of the first display portion 310. The lens 144 may collect external light via the light-transmissive portion 311.

It should be understood that the passing through mentioned in embodiments of this application refers to penetrating through. For example, that the front camera module 140 passes through the first avoidance hole 121 means that the front camera module 140 penetrates through the first avoidance hole 121, for example, the front camera module 140 penetrates through the first avoidance hole 121 in a Z-axis direction in the figure. Similar descriptions below may be understood in the same way.

The back camera module 150 (as shown in FIG. 4) is disposed on a recess bottom wall of the third mounting recess 116 and is electrically connected to the circuit board 120 to implement electrical connection with the processor via the circuit board 120. Specifically, the back camera module 150 passes through the second avoidance hole 122 and the third avoidance hole 123 of the circuit board 120. The back camera module 150 protrudes relative to the lower surface of the middle frame 111. In some other embodiments, the back camera module 150 may alternatively not protrude relative to the lower surface of the middle frame 111. A relative position relationship between the back camera module 150 and the middle frame 111 is not specifically limited in embodiments of this application.

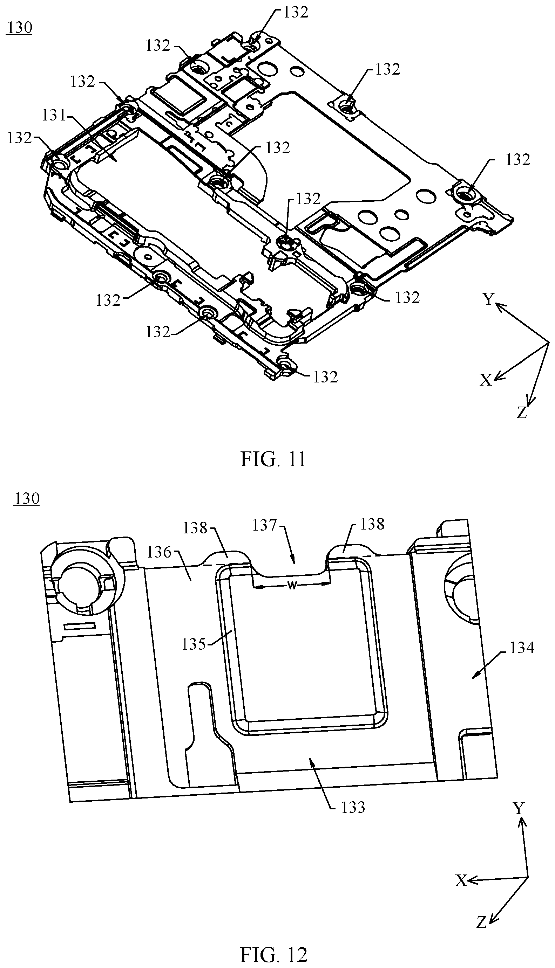

Refer to FIG. 4, FIG. 11, and FIG. 12. FIG. 11 is a schematic diagram of a structure of the bracket 130 in the electronic device 1000 shown in FIG. 4, and FIG. 12 is a schematic diagram of a partial structure of the bracket 130 shown in FIG. 11.

The bracket 130 may be a main board bracket of the electronic device 1000. The bracket 130 is provided with an avoidance hole 131 and a plurality of mounting holes 132. The avoidance hole 131 and the plurality of mounting holes 132 run through the bracket 130 in a thickness direction of the bracket 130 (a Z-axis direction in the figure). Specifically, the avoidance hole 131 is located on a right side of the bracket 130, some of the mounting holes 132 are located on an edge of the bracket 130, and some of the mounting holes 132 are located in the middle of the bracket 130. The avoidance hole 131 and the plurality of mounting holes 132 are arranged at intervals.

In this embodiment, the bracket 130 includes a metal bracket portion 133 and a plastic bracket portion 134. The metal bracket portion 133 is fastened to the plastic bracket portion 134. For example, the metal bracket portion 133 and the plastic bracket portion 134 may be integrally formed by in-mold injection molding. The plastic bracket portion 134 is provided with the avoidance hole 131 and the plurality of mounting holes 132. The metal bracket portion 133 includes a raised portion 135 and a plane portion 136. The plane portion 136 is fastened to the raised portion 135. Specifically, the raised portion 135 is located on the top of the metal bracket portion 133, and raises relative to the plane portion 136 in a direction facing away from an upper surface of the plane portion 136 (a negative direction of the Z-axis in the figure). For example, the raised portion 135 is rectangular. In some other embodiments, the raised portion 135 may alternatively be in other shapes. This is not specifically limited in embodiments of this application.

In addition, the raised portion 135 is provided with a slot 137, and the slot 137 is located on the top of the raised portion 135. The slot 137 runs through the raised portion 135 in a thickness direction of the raised portion 135 (a Z-axis direction in the figure), and is communicated with an inner side and an outer side of the raised portion 135. In an X-axis direction, a width of the slot 137 is w. It may be understood that the width of the slot 137 in this embodiment of this application refers to a maximum width of the slot 137. For example, w is greater than or equal to 2.5 mm and less than 3.5 mm. In some other embodiments, w may alternatively be less than 2.5 mm, or w may be greater than 3.5 mm.

The plane portion 136 is disposed around the raised portion 135. The plane portion 136 includes two support portions 138. The two support portions 138 are located on the top of the plane portion 136. Specifically, in the X-axis direction, the two support portions 138 are respectively located on two opposite sides of the slot 137 and extend from an edge of the plane portion 136 in a direction away from the raised portion 135 (a positive direction of a Y-axis in the figure). For example, the two support portions 138 are both horn-shaped. In some other embodiments, the support portion 138 may alternatively be in other shapes. This is not specifically limited in embodiments of this application.

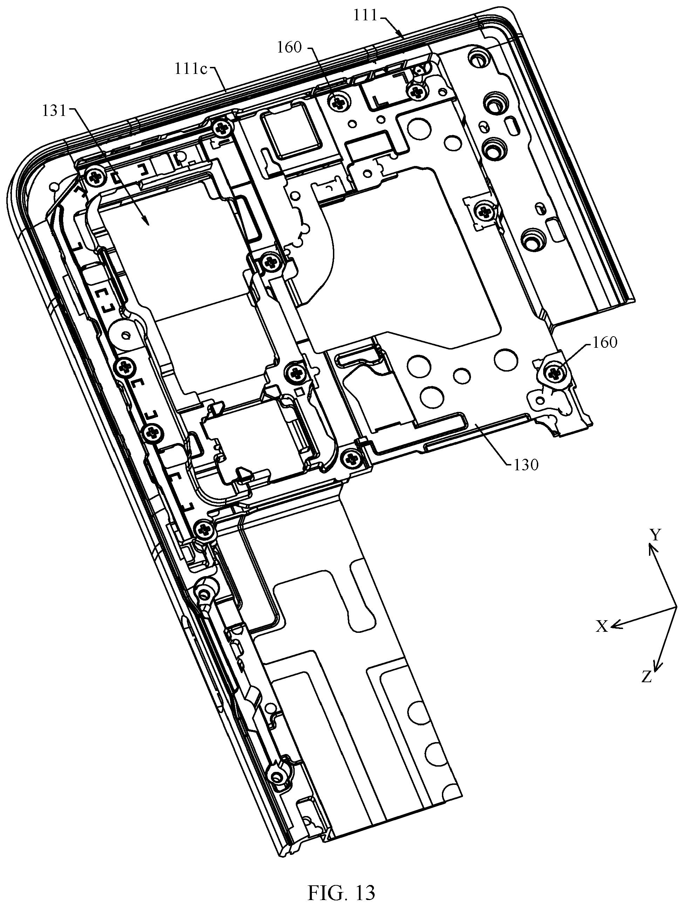

Refer to FIG. 4, FIG. 10, and FIG. 13. FIG. 13 is a schematic diagram of an assembly structure of the middle frame 111, the circuit board 120, the bracket 130, and the front camera module 140 of the electronic device 1000 shown in FIG. 4.

The bracket 130 is disposed in the first mounting recess 114. Specifically, the bracket 130 is disposed between the circuit board 120 and the back cover 112. The avoidance hole 131 of the bracket 130 is communicated with the second avoidance hole 122 and the third avoidance hole 123 of the circuit board 120, and each mounting hole 124 of the bracket 130 is communicated with one mounting hole 124 of the circuit board 120. In addition, the first main body 100 further includes a plurality of fasteners 160. The fasteners 160 each pass through one mounting hole 132 of the bracket 130 and one mounting hole 124 of the circuit board 120 in sequence, and each are fixedly disposed in one fixing hole 118 of the middle frame 111 to dispose the circuit board 120 and the bracket 130 in the first mounting recess 114. For example, the fastener 160 may be a screw or a bolt.

Further refer to FIG. 3 and FIG. 4. The back camera module 150 (not shown in FIG. 9) further passes through the avoidance hole 131 of the bracket 130 and the camera hole 113 of the back cover 112, and protrudes relative to the back cover 112. In some other embodiments, the back camera module 150 may alternatively not protrude relative to the back cover 112. A relative position relationship between the back camera module 150 and the back cover 112 is not specifically limited in embodiments of this application.

The bracket 130 is also disposed between the front camera module 140 and the back cover 112, and the metal bracket portion 133 of the bracket 130 covers the front camera module 140. In this embodiment, the plane portion 136 of the metal bracket portion 133 is disposed opposite to the front camera module 140 and abuts against the front camera module 140. Specifically, the plane portion 136 abuts against the reinforcement plate 145 of the circuit board assembly 141 to improve assembly stability of the front camera module 140. The two support portions 138 both abut against the reinforcement plate 145. It may be understood that a design of the two support portions 138 increases an abutting area of the plane portion 136 to the front camera module 140, to facilitating improving assembly stability of the front camera module 140.

In addition, the raised portion 135 of the metal bracket portion 133 is disposed corresponding to the front camera module 140. Specifically, the raised portion 135 raises in a direction facing away from the front camera module 140, and is spaced apart from and disposed opposite to the reinforcement plate 145. Specifically, the raised portion 135 is disposed corresponding to the image sensor 142. An area of the raised portion 135 is greater than or equal to an area of the image sensor 142, and a projection of the image sensor 142 on the bracket 130 is located within the raised portion 135.

It should be noted that in this embodiment of this application, one being disposed corresponding to the other means that a vertical projection of one on the other at least partially covers the other. For example, that the raised portion 135 is disposed corresponding to the image sensor 142 means that a vertical projection of the image sensor 142 on the bracket 130 is at least partially located within the raised portion 135, or a vertical projection of the raised portion 135 on a plane where the image sensor 142 is located is at least partially located within the image sensor 142.

It may be understood that when being squeezed by an external force, the back cover 112 is very likely to deform and sink toward an inner side of the middle frame 111, causing internal components or modules of the first main body 100 to be squeezed. In this embodiment, the back cover 112 covers the raised portion 135 of the bracket 130 and the front camera module 140. When the back cover 112 is squeezed by an external force at a position corresponding to the front camera module 140, the external force borne by the back cover 112 may first act on the bracket 130, and then act on the front camera module 140 via the bracket 130. The image sensor 142 is a member of the front camera module 140 close to the bracket 130, and is a component most likely to fail due to the external force. Therefore, to avoid failure of the front camera module 140, the image sensor 142 needs to be protected first.

In this embodiment, the bracket 130 includes the raised portion 135, and the raised portion 135 is disposed corresponding to the image sensor 142 to protect the image sensor 142. When the back cover 112 is squeezed by an external force to deform, causing the bracket 130 to be squeezed, the external force may first act on the raised portion 135 to cause elastic deformation of the raised portion 135. In this case, stress applied to the raised portion 135 may be released to the plane portion 136 via the raised portion 135. This can avoid directly acting on the image sensor 142 of the front camera module 140 and causing a failure of the front camera module 140.

In addition, because the projection of the image sensor 142 on the bracket 130 is located within the raised portion 135, regardless of angle the back cover 112 squeezes the bracket 130, the raised portion 135 may deform to release stress to protect the image sensor 142, so that all-round protection for the image sensor 142 is achieved. In addition, because the raised portion 135 is provided with the slot 137, the stress applied to the raised portion 135 may be evenly transferred to the plane portion 136 instead of being concentrated on a periphery of the raised portion 135. When stress applied to the back cover 112 is removed, the elastic deformation of the raised portion 135 may be recovered. When the back cover 112 is squeezed next time, the raised portion 135 can still resist the external force, to avoid damage to the image sensor 142.

It may be understood that a design of the raised portion 135 and the slot 137 in the bracket 130 can achieve effective protection for the image sensor 142 of the front camera module 140. Next, a simulation comparative analysis is performed on stress borne by the image sensor of the front camera module for four different design schemes of a raised portion, a plane portion, and a slot. An example in which squeeze force borne by the back cover of the electronic device is 200 N is used for simulation.

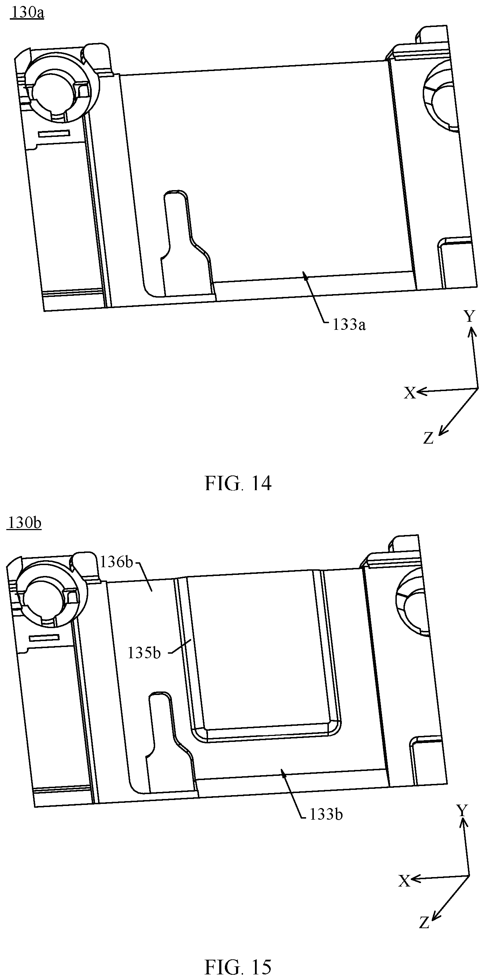

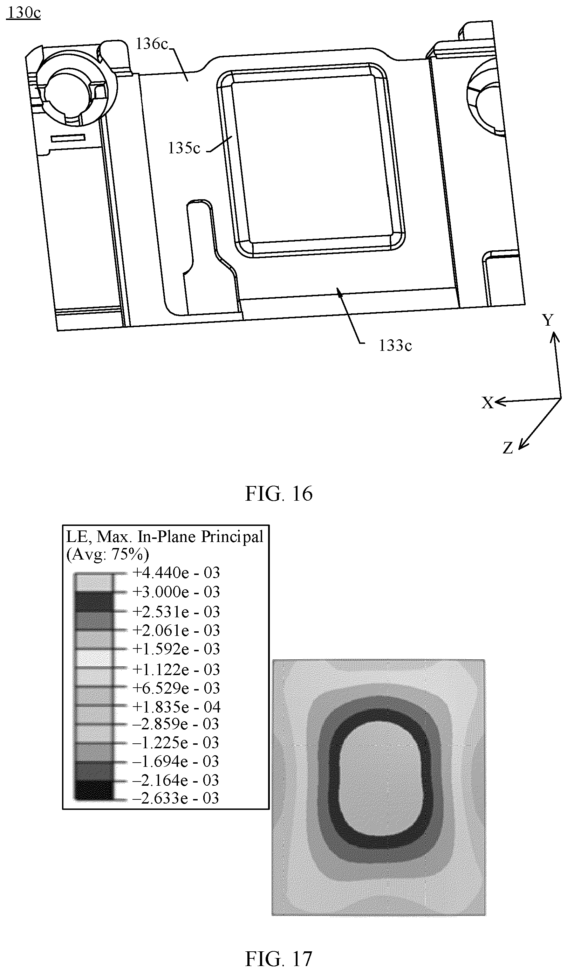

Refer to FIG. 14 to FIG. 16. FIG. 14 is a schematic diagram of a partial structure of a bracket 130a shown in a first design scheme, FIG. 15 is a schematic diagram of a partial structure of a bracket 130b shown in a second design scheme, and FIG. 16 is a schematic diagram of a partial structure of a bracket 130c shown in a third design scheme.

According to FIG. 14 to FIG. 16, in the bracket 130a shown in the first design scheme, a metal bracket portion 133a does not include a raised portion, and the metal bracket portion 133a is in a conventional plane design. In the bracket 130b shown in the second design scheme, a metal bracket portion 133b includes a raised portion 135b and a plane portion 136b, and the plane portion 136b is disposed around three sides of the raised portion 135b. In the bracket 130c shown in the third design scheme, a metal bracket portion 133c includes a raised portion 135c and a plane portion 136c, and the plane portion 136c is disposed around four sides of the raised portion 135c. A bracket shown in a fourth design scheme is the bracket 130 shown in embodiments, as shown in FIG. 12.

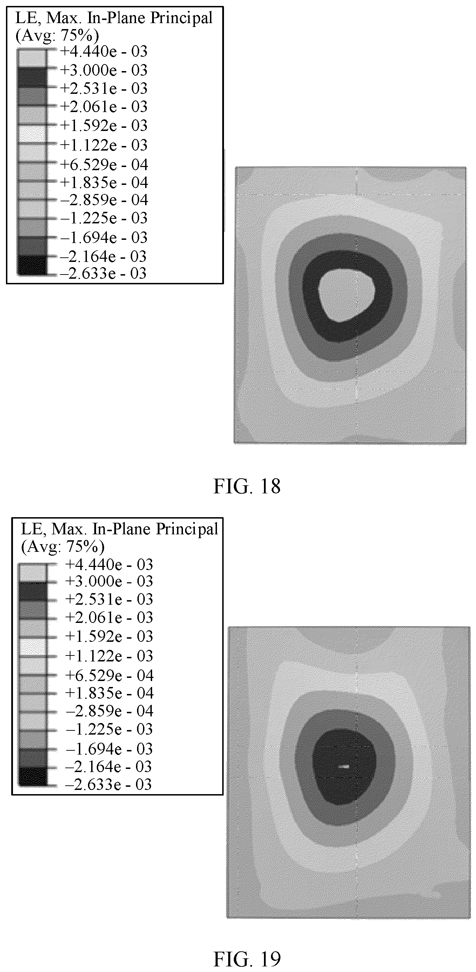

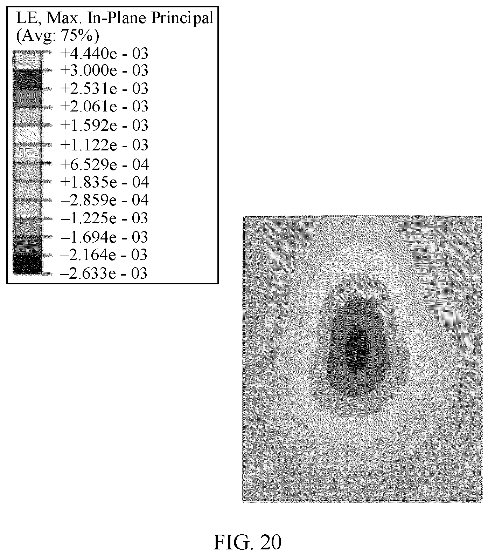

Refer to FIG. 17 to FIG. 20. FIG. 17 is a diagram of a simulation result of stress borne by an image sensor in a front camera module when the bracket 130a shown in the first design scheme is used in an electronic device, FIG. 18 is a diagram of a simulation result of stress borne by an image sensor in a front camera module when the bracket 130b shown in the second design scheme is used in an electronic device, FIG. 19 is a diagram of a simulation result of stress borne by an image sensor in a front camera module when the bracket 130c shown in the third design scheme is used in an electronic device, and FIG. 20 is a diagram of a simulation result of stress borne by an image sensor in a front camera module when the bracket 130 shown in the fourth design scheme is used in an electronic device.

As shown in FIG. 17 and FIG. 20, regions with darker grayscale represent regions with greater stress, regions with lighter grayscale represent regions with less stress, and a gray region in the middle is a stress failure region.

It can be learned from FIG. 17 to FIG. 20 that in the first design scheme, the stress borne by the image sensor is 4.44 Kpa, and a stress failure region of the image sensor is large. In comparison with the first design scheme, a stress failure region of the image sensor in the second design scheme is reduced, but there is still a risk of failure. In comparison with the second design scheme, a stress failure region of the image sensor in the third design scheme is further reduced. In comparison with the first design scheme to the third design scheme, the stress borne by the image sensor in the fourth design scheme is below 2.5 Kpa, and there is no stress failure region in the image sensor. In other words, the image sensor can withstand external squeeze within 200 N without causing a failure.

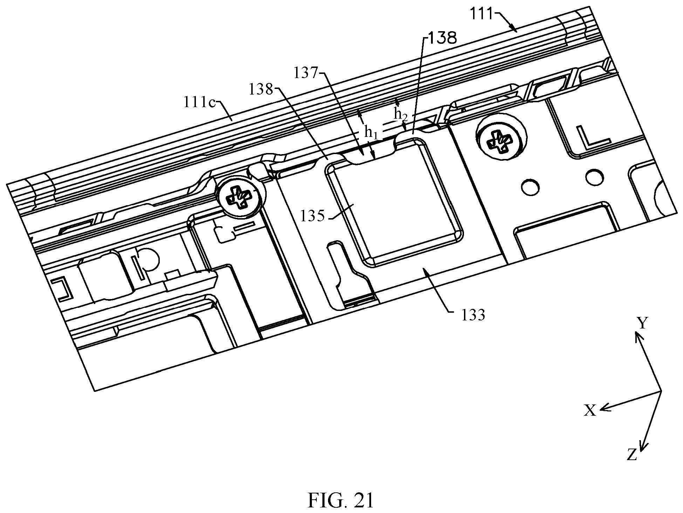

FIG. 21 is a schematic diagram of a partial structure of the assembly structure shown in FIG. 13.

In this embodiment, in a Y-axis direction, the metal bracket portion 133 and the middle frame antenna 111c are spaced apart. Specifically, the slot 137 and the two support portions 138 are spaced apart from and provided opposite to the middle frame antenna 111c. A minimum distance between the bottom of the slot 137 and the middle frame antenna 111c is h₁, and a minimum distance between the support portion 138 and the middle frame antenna 111c (in other words, a distance between the metal bracket portion 133 and the middle frame antenna 111c) is h₂. For example, h₁ is greater than or equal to 3.2 mm, and h₂ is greater than or equal to 3 mm.

It may be understood that because the metal bracket portion 133 is made of a metal material, when the metal bracket portion 133 is close to the middle frame antenna 111c, signal interference may be caused to the middle frame antenna 111c. When h₂ is less than 3 mm, the metal bracket portion 133 may cause attenuation of signal radiation efficiency of the middle frame antenna 111c. In addition, because the reinforcement plate 145 is also made of a metal material, the reinforcement plate 145, the raised portion 135, and an air medium between the reinforcement plate 145 and the raised portion 135 may form a local capacitor, and the local capacitor may also increase attenuation of the signal radiation efficiency of the middle frame antenna 111c.

It should be noted that a design of the slot 137 in the raised portion 135 can further reduce a relative area between the raised portion 135 and the reinforcement plate 145, and reduce an impact of the local capacitor formed by the raised portion 135 and the reinforcement plate 145 on the signal radiation efficiency of the middle frame antenna 111c.

Next, a simulation comparative analysis is performed on an impact of a metal support portion on signal radiation efficiency of a middle frame antenna for six different experimental schemes of a raised portion, a plane portion, and a slot. An example in which the middle frame antenna is a GPS antenna is used for description.

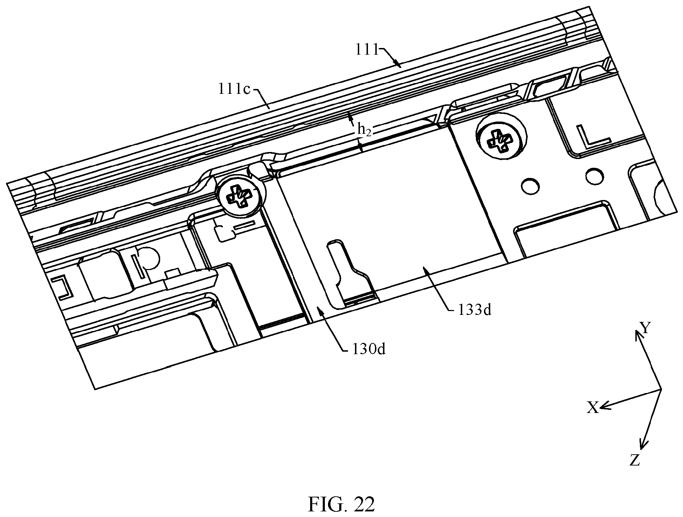

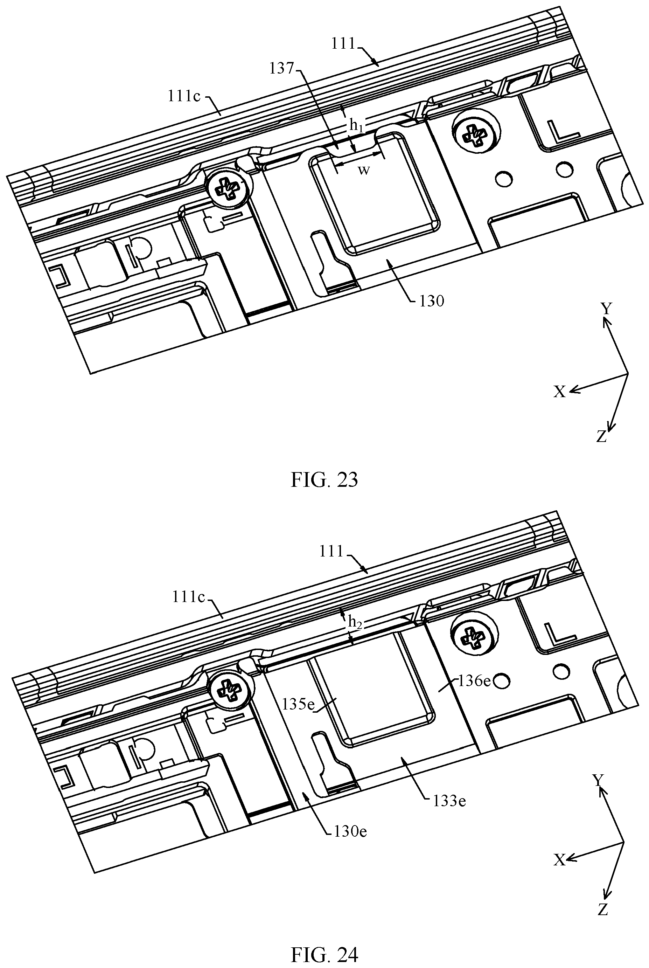

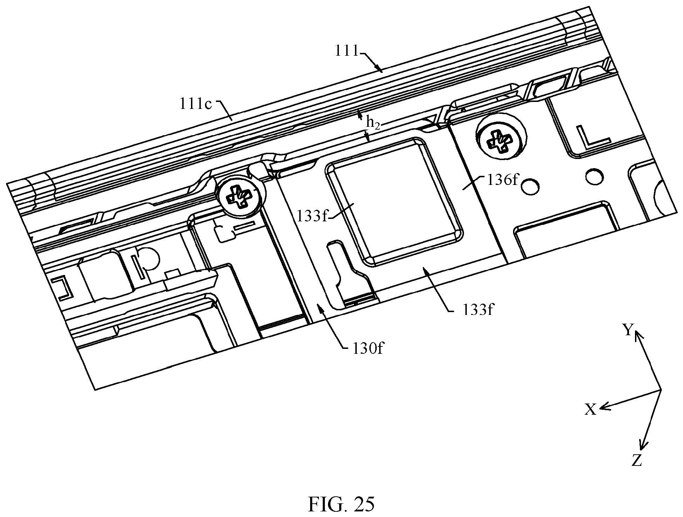

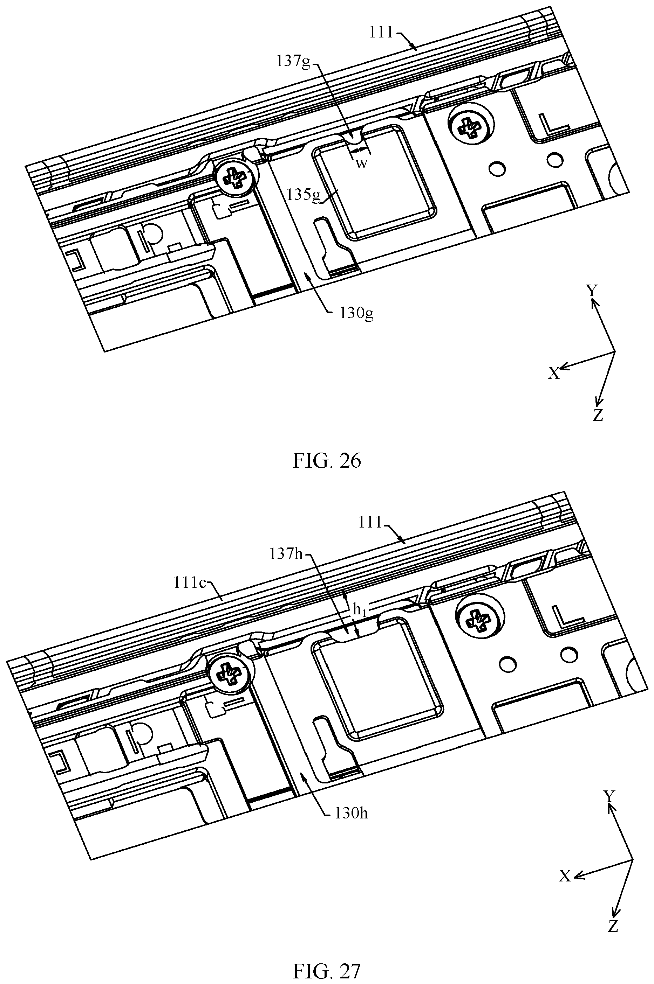

Refer to FIG. 22 to FIG. 27. FIG. 22 is a schematic diagram of an assembly structure of a bracket 130d and a middle frame 111 shown in a first experimental scheme, FIG. 23 is a schematic diagram of an assembly structure of a bracket 130 and a middle frame 111 shown in a second experimental scheme, FIG. 24 is a schematic diagram of an assembly structure of a bracket 130e and a middle frame 111 shown in a third experimental scheme, FIG. 25 is a schematic diagram of an assembly structure of a bracket 130f and a middle frame 111 shown in a fourth experimental scheme, FIG. 26 is a schematic diagram of an assembly structure of a bracket 130g and a middle frame 111 shown in a fifth experimental scheme, and FIG. 27 is a schematic diagram of an assembly structure of a bracket 130h and a middle frame 111 shown in a sixth experimental scheme.

According to FIG. 22 to FIG. 27, in the bracket 130d shown in the first experimental scheme, a metal bracket portion 133d does not include a raised portion, the metal bracket portion 133d is in a conventional plane design, and a minimum distance h₂ between the metal bracket portion 133d and a middle frame antenna 111c is 2.7 mm. The bracket 130 shown in the second experimental scheme is the bracket 130 shown in embodiments, a minimum distance h₁ between the bottom of a slot 137 and a middle frame antenna 111c is 3.3 mm, and a width w of the slot 137 is 3 mm. In the bracket 130e shown in the third experimental scheme, a metal bracket portion 133e includes a raised portion 135e and a plane portion 136e, the plane portion 136e is disposed around three sides of the raised portion 135e, and a minimum distance h₂ between the metal bracket portion 133e and a middle frame antenna 111c is 2.7 mm. In the bracket 130f shown in the fourth experimental scheme, a metal bracket portion 133f includes a raised portion 135f and a plane portion 136f, the plane portion 136f is disposed around four sides of the raised portion 135f, and a minimum distance h₂ between the metal bracket portion 133f and a middle frame antenna 111c is 2.3 mm. A difference between the bracket 130g shown in the fifth experimental scheme and the bracket 130f shown in the fourth experimental scheme is that a raised portion 135g is provided with a slot 137g, and a width w of the slot 137g is 1 mm. A difference between the bracket 130h shown in the sixth experimental scheme and the bracket 130g shown in the fifth experimental scheme is that a minimum distance h₁ between the bottom of a slot 137h and a middle frame antenna 111c is 2.8 mm.

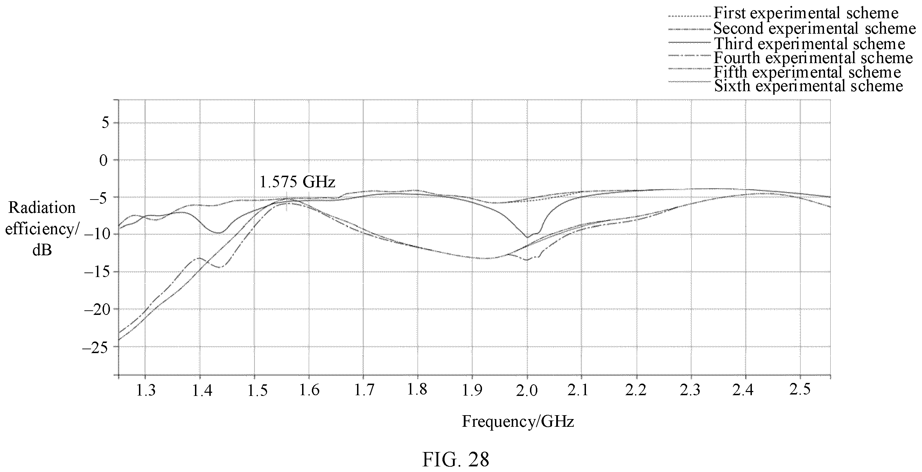

FIG. 28 is a diagram of efficiency curves of a middle frame antenna when the brackets shown in the six experimental schemes are used in an electronic device. In the curve diagram shown in FIG. 28, a horizontal axis represents frequency (in a unit of GHz) and a vertical axis represents efficiency (in a unit of dB).

It may be understood that because an example in which the middle frame antenna is a GPS antenna is used for description, attenuation corresponding to different experimental schemes in a GPS frequency band 1.575 GHZ may be compared to optimize structures of a raised portion, a plane portion, and a slot. 1.575 GHZ is a frequency of a BeiDou navigation signal.

According to FIG. 28, in the first experimental scheme, when the distance h₂ between the metal bracket portion 133d and the middle frame antenna 111c is 2.7 mm, attenuation corresponding to the middle frame antenna 111c in the GPS frequency band 1.575 GHZ is -0.505 dB. In the second experimental scheme, attenuation corresponding to the middle frame antenna 111c in the GPS frequency band 1.575 GHZ is equivalent to that of the first scheme. In the third experimental scheme, attenuation corresponding to the middle frame antenna 111c in the GPS frequency band 1.575 GHZ is -0.53 dB, and attenuation within a range of ±0.1 GHZ of 1.575 GHZ is very large, indicating that the middle frame antenna 111c is unstable. Similarly, according to the fourth experimental scheme, the fifth experimental scheme, and the sixth experimental scheme, when the plane portion surrounds four sides of the raised portion and there is no slot or a slot size is too small, attenuation corresponding to the middle frame antenna 111c corresponding to the GPS frequency band 1.575 GHZ may be reduced, and attenuation within a range of ±0.1 GHZ may be very large.

In this embodiment, the bracket 130 includes the raised portion 135. When the back cover 112 is squeezed by an external force to deform, causing the bracket 130 to be squeezed, the external force may first act on the raised portion 135 to cause elastic deformation of the raised portion 135. In this case, stress applied to the raised portion 135 may be released to the plane portion 136 via the raised portion 135. This can avoid directly acting on the image sensor 142 of the front camera module 140 and causing a failure of the front camera module 140.

In addition, because the raised portion 135 is provided with the slot 137, the stress applied to the raised portion 135 may be evenly transferred to the plane portion 136 instead of being concentrated on a periphery of the raised portion 135. When stress applied to the back cover 112 is removed, the elastic deformation of the raised portion 135 may be recovered. When the back cover 112 is squeezed next time, the raised portion 135 can still resist the external force, to avoid damage to the image sensor 142. Furthermore, the slot 137 is spaced apart from and provided opposite to the middle frame antenna 111c, the minimum distance h₁ between the bottom of the slot 137 and the middle frame antenna 111c is greater than or equal to 3.2 mm, and the width w of the slot 137 is greater than or equal to 2.5 mm and less than or equal to 3.5 mm. This can reduce the signal interference caused by the metal bracket portion 133 on the middle frame antenna 111c and ensure the signal radiation efficiency of the middle frame antenna 111c.

The foregoing descriptions are merely specific implementations of this application, but are not intended to limit the protection scope which is defined by the claims.

## Claims

1. An electronic device (1000), comprising a housing, a front camera module (140), and a bracket (130, 130a-h), wherein the housing comprises a back cover (112), the front camera module (140) and the bracket (130, 130a-h) are both disposed on the housing, the bracket (130, 130a-h) is disposed between the back cover (112) and the front camera module (140), the bracket (130, 130a-h) comprises a raised portion, the raised portion is disposed corresponding to the front camera module (140) and raises in a direction facing away from the front camera module (140), **characterized in that** the raised portion is provided with a slot (137, 137g, 137h), and the slot (137, 137g, 137h) is communicated with an inner side and an outer side of the raised portion.

2. The electronic device (1000) according to claim 1, wherein the front camera module (140) comprises an image sensor (142), and a projection of the image sensor (142) on the bracket (130, 130a-h) is located in the raised portion.

3. The electronic device (1000) according to claim 1 or 2, wherein the bracket (130, 130a-h) further comprises a plane portion (136, 136b, 136c, 136e, 136f), the plane portion (136, 136b, 136c, 136e, 136f) is disposed around a periphery of the raised portion, the raised portion raises relative to the plane portion (136, 136b, 136c, 136e, 136f), and the plane portion (136, 136b, 136c, 136e, 136f) is disposed opposite to the front camera module (140) and abuts against the front camera module (140).

4. The electronic device (1000) according to claim 3, wherein the plane portion (136, 136b, 136c, 136e, 136f) comprises two support portions (138), the support portions (138) are respectively located on opposite sides of the slot (137, 137g, 137h) and extend from an edge of the plane portion (136, 136b, 136c, 136e, 136f) in a direction away from the raised portion, and the two support portions (138) both abut against the front camera module (140).

5. The electronic device (1000) according to claim 3 or 4, wherein the housing further comprises a middle frame (111), the back cover (112) is disposed on one side of the middle frame (111), the front camera module (140) and the bracket (130, 130a-h) are both disposed on the middle frame (111), the middle frame (111) comprises a middle frame antenna (111c), the bracket (130, 130a-h) comprises a metal bracket portion (133, 133a-f), the metal bracket portion (133, 133a-f) comprises the raised portion and the plane portion (136, 136b, 136c, 136e, 136f), and the metal bracket portion (133, 133a-f) and the middle frame antenna (111c) are spaced apart and disposed opposite to each other.

6. The electronic device (1000) according to claim 5, wherein the front camera module (140) further comprises a circuit board assembly (141), the image sensor (142) is disposed on the circuit board assembly (141), the circuit board assembly (141) comprises a reinforcement plate (145), the reinforcement plate (145) is disposed opposite to the raised portion, the reinforcement plate (145) is made of a metal material, and the slot (137, 137g, 137h) is provided opposite to the middle frame antenna (111c).

7. The electronic device (1000) according to claim 5 or 6, wherein the middle frame antenna (111c) is a GPS antenna, and a minimum distance between the metal bracket portion (133, 133a-f) and the middle frame antenna (111c) is greater than or equal to 3 mm.

8. The electronic device (1000) according to claim 7, wherein a minimum distance between a bottom of the slot (137, 137g, 137h) and the middle frame antenna (111c) is greater than or equal to 3.2 mm, and a width of the slot (137, 137g, 137h) is greater than or equal to 2.5 mm and less than or equal to 3.5 mm.

9. The electronic device (1000) according to claim 5 or 6, wherein the middle frame antenna (111c) is an LTE antenna, a GSM antenna, an NR antenna, or a Wi-Fi antenna.

10. The electronic device (1000) according to any one of claims 1 to 9, wherein a material of the back cover (112) comprises at least one of polyurethane, fur, or glass fiber.

11. The electronic device (1000) according to any one of claims 5 to 9, wherein the electronic device (1000) further comprises a display screen (300), the display screen (300) is disposed on a side of the middle frame (111) facing away from the back cover (112), the display screen (300) comprises a light-transmissive portion (311), and an imaging surface of the front camera module (140) is disposed opposite to the light-transmissive portion (311).

12. The electronic device (1000) according to claim 11, wherein a thickness of the electronic device (1000) is greater than or equal to 5 mm and less than or equal to 7 mm.

13. The electronic device (1000) according to any one of claims 1 to 10, wherein the electronic device (1000) comprises a first housing (110), a second housing (210), and a rotation mechanism, the rotation mechanism is connected between the first housing (110) and the second housing (210), the first housing (110) comprises the back cover (112), and the front camera module (140) and the bracket (130, 130a-h) are both disposed in the first housing (110).

14. The electronic device (1000) according to claim 13, wherein the electronic device (1000) further comprises a display screen (300), the display screen (300) comprises a first display portion (310), a second display portion (320), and a bendable portion (330), the bendable portion (330) is fastened between the first display portion (310) and the second display portion (320), the first display portion (310) is disposed in the first housing (110), the second display portion (320) is disposed in the second housing (210), and the bendable portion (330) is disposed opposite to the rotation mechanism; and
the first display portion (310) comprises a light-transmissive portion (311), and an imaging surface of the front camera module (140) is disposed opposite to the light-transmissive portion (311).

15. The electronic device (1000) according to claim 14, wherein a sum of thicknesses of the first housing (110) and the first display portion (310) is greater than or equal to 5 mm and less than or equal to 7 mm.

## Patentansprüche

1. Elektronische Vorrichtung (1000), umfassend ein Gehäuse, ein Frontkameramodul (140) und eine Halterung (130, 130a-h), wobei das Gehäuse eine Rückabdeckung (112) umfasst, das Frontkameramodul (140) und die Halterung (130, 130a-h) beide an dem Gehäuse angeordnet sind, die Halterung (130, 130a-h) zwischen der Rückabdeckung (112) und dem Frontkameramodul (140) angeordnet ist, die Halterung (130, 130a-h) einen erhabenen Abschnitt umfasst, der erhabene Abschnitt entsprechend dem Frontkameramodul (140) angeordnet ist und in einer von dem Frontkameramodul (140) abgewandten Richtung hervorragt, **dadurch gekennzeichnet, dass** der erhabene Abschnitt mit einem Schlitz (137, 137g, 137h) versehen ist und der Schlitz (137, 137g, 137h) eine Innenseite und eine Außenseite des erhabenen Abschnitts verbindet.

2. Elektronische Vorrichtung (1000) nach Anspruch 1, wobei das Frontkameramodul (140) einen Bildsensor (142) umfasst und eine Projektion des Bildsensors (142) auf die Halterung (130, 130a-h) in dem erhabenen Abschnitt liegt.

3. Elektronische Vorrichtung (1000) nach Anspruch 1 oder 2, wobei die Halterung (130, 130a-h) ferner einen ebenen Abschnitt (136, 136b, 136c, 136e, 136f) umfasst, der ebene Abschnitt (136, 136b, 136c, 136e, 136f) um einen Umfang des erhabenen Abschnitts herum angeordnet ist, der erhabene Abschnitt relativ zu dem ebenen Abschnitt (136, 136b, 136c, 136e, 136f) hervorragt und der ebene Abschnitt (136, 136b, 136c, 136e, 136f) dem Frontkameramodul (140) gegenüberliegend angeordnet ist und an dem Frontkameramodul (140) anliegt.

4. Elektronische Vorrichtung (1000) nach Anspruch 3, wobei der ebene Abschnitt (136, 136b, 136c, 136e, 136f) zwei Stützabschnitte (138) umfasst, die Stützabschnitte (138) sich jeweils auf gegenüberliegenden Seiten des Schlitzes (137, 137g, 137h) befinden und sich von einem Rand des ebenen Abschnitts (136, 136b, 136c, 136e, 136f) in einer von dem erhabenen Abschnitt wegweisenden Richtung erstrecken und die zwei Stützabschnitte (138) beide an dem Frontkameramodul (140) anliegen.

5. Elektronische Vorrichtung (1000) nach Anspruch 3 oder 4, wobei das Gehäuse ferner einen Mittelrahmen (111) umfasst, die Rückabdeckung (112) auf einer Seite des Mittelrahmens (111) angeordnet ist, das Frontkameramodul (140) und die Halterung (130, 130a-h) beide an dem Mittelrahmen (111) angeordnet sind, der Mittelrahmen (111) eine Mittelrahmenantenne (111c) umfasst, die Halterung (130, 130a-h) einen Metallhalterungsabschnitt (133, 133a-f) umfasst, der Metallhalterungsabschnitt (133, 133a-f) den erhabenen Abschnitt und den ebenen Abschnitt (136, 136b, 136c, 136e, 136f) umfasst und der Metallhalterungsabschnitt (133, 133a-f) und die Mittelrahmenantenne (111c) voneinander beabstandet und einander gegenüberliegend angeordnet sind.

6. Elektronische Vorrichtung (1000) nach Anspruch 5,
wobei das Frontkameramodul (140) ferner eine Leiterplattenanordnung (141) umfasst, der Bildsensor (142) an der Leiterplattenanordnung (141) angeordnet ist, die Leiterplattenanordnung (141) eine Verstärkungsplatte (145) umfasst, die Verstärkungsplatte (145) dem erhabenen Abschnitt gegenüberliegend angeordnet ist, die Verstärkungsplatte (145) aus einem Metallmaterial hergestellt ist und der Schlitz (137, 137g, 137h) der Mittelrahmenantenne (111c) gegenüberliegend bereitgestellt ist.

7. Elektronische Vorrichtung (1000) nach Anspruch 5 oder 6, wobei die Mittelrahmenantenne (111c) eine GPS-Antenne ist und ein Mindestabstand zwischen dem Metallhalterungsabschnitt (133, 133a-f) und der Mittelrahmenantenne (111c) größer als oder gleich 3 mm ist.

8. Elektronische Vorrichtung (1000) nach Anspruch 7, wobei ein Mindestabstand zwischen einem Boden des Schlitzes (137, 137g, 137h) und der Mittelrahmenantenne (111c) größer als oder gleich 3,2 mm ist und eine Breite des Schlitzes (137, 137g, 137h) größer als oder gleich 2,5 mm und kleiner als oder gleich 3,5 mm ist.

9. Elektronische Vorrichtung (1000) nach Anspruch 5 oder 6, wobei die Mittelrahmenantenne (111c) eine LTE-Antenne, eine GSM-Antenne, eine NR-Antenne oder eine Wi-Fi-Antenne ist.

10. Elektronische Vorrichtung (1000) nach einem der Ansprüche 1 bis 9, wobei ein Material der Rückabdeckung (112) mindestens eines von Polyurethan, Pelz oder Glasfaser umfasst.

11. Elektronische Vorrichtung (1000) nach einem der Ansprüche 5 bis 9, wobei die elektronische Vorrichtung (1000) ferner einen Anzeigebildschirm (300) umfasst, der Anzeigebildschirm (300) auf einer von der Rückabdeckung (112) abgewandten Seite des Mittelrahmens (111) angeordnet ist, der Anzeigebildschirm (300) einen lichtdurchlässigen Abschnitt (311) umfasst und eine Abbildungsfläche des Frontkameramoduls (140) dem lichtdurchlässigen Abschnitt (311) gegenüberliegend angeordnet ist.

12. Elektronische Vorrichtung (1000) nach Anspruch 11, wobei eine Dicke der elektronischen Vorrichtung (1000) größer als oder gleich 5 mm und kleiner als oder gleich 7 mm ist.

13. Elektronische Vorrichtung (1000) nach einem der Ansprüche 1 bis 10, wobei die elektronische Vorrichtung (1000) ein erstes Gehäuse (110), ein zweites Gehäuse (210) und einen Drehmechanismus umfasst, der Drehmechanismus zwischen dem ersten Gehäuse (110) und dem zweiten Gehäuse (210) verbunden ist, das erste Gehäuse (110) die Rückabdeckung (112) umfasst und das Frontkameramodul (140) und die Halterung (130, 130a-h) beide in dem ersten Gehäuse (110) angeordnet sind.

14. Elektronische Vorrichtung (1000) nach Anspruch 13, wobei die elektronische Vorrichtung (1000) ferner einen Anzeigebildschirm (300) umfasst, der Anzeigebildschirm (300) einen ersten Anzeigeabschnitt (310), einen zweiten Anzeigeabschnitt (320) und einen biegsamen Abschnitt (330) umfasst, der biegsame Abschnitt (330) zwischen dem ersten Anzeigeabschnitt (310) und dem zweiten Anzeigeabschnitt (320) befestigt ist, der erste Anzeigeabschnitt (310) in dem ersten Gehäuse (110) angeordnet ist, der zweite Anzeigeabschnitt (320) in dem zweiten Gehäuse (210) angeordnet ist und der biegsame Abschnitt (330) dem Drehmechanismus gegenüberliegend angeordnet ist; und
der erste Anzeigeabschnitt (310) einen lichtdurchlässigen Abschnitt (311) umfasst und eine Abbildungsfläche des Frontkameramoduls (140) dem lichtdurchlässigen Abschnitt (311) gegenüberliegend angeordnet ist.

15. Elektronische Vorrichtung (1000) nach Anspruch 14, wobei eine Summe von Dicken des ersten Gehäuses (110) und des ersten Anzeigeabschnitts (310) größer als oder gleich 5 mm und kleiner als oder gleich 7 mm ist.

## Revendications

1. Dispositif électronique (1000), comprenant un boîtier, un module de caméra frontale (140) et un support (130, 130a-h), dans lequel le boîtier comprend un couvercle arrière (112), le module de caméra frontale (140) et le support (130, 130a-h) sont tous deux disposés sur le boîtier, le support (130, 130a-h) est disposé entre le couvercle arrière (112) et le module de caméra frontale (140), le support (130, 130a-h) comprend une partie surélevée, la partie surélevée est disposée en correspondance avec le module de caméra frontale (140) et s'élève dans une direction tournée à l'opposé du module de caméra frontale (140), **caractérisé en ce que** la partie surélevée est pourvue d'une fente (137, 137g, 137h), et la fente (137, 137g, 137h) fait communiquer un côté intérieur et un côté extérieur de la partie surélevée.

2. Dispositif électronique (1000) selon la revendication 1, dans lequel le module de caméra frontale (140) comprend un capteur d'image (142), et une projection du capteur d'image (142) sur le support (130, 130a-h) est située dans la partie surélevée.

3. Dispositif électronique (1000) selon la revendication 1 ou 2, dans lequel le support (130, 130a-h) comprend en outre une partie plane (136, 136b, 136c, 136e, 136f), la partie plane (136, 136b, 136c, 136e, 136f) est disposée autour d'une périphérie de la partie surélevée, la partie surélevée s'élève par rapport à la partie plane (136, 136b, 136c, 136e, 136f), et la partie plane (136, 136b, 136c, 136e, 136f) est disposée en regard du module de caméra frontale (140) et vient en butée contre le module de caméra frontale (140).

4. Dispositif électronique (1000) selon la revendication 3, dans lequel la partie plane (136, 136b, 136c, 136e, 136f) comprend deux parties de support (138), les parties de support (138) sont respectivement situées sur des côtés opposés de la fente (137, 137g, 137h) et s'étendent depuis un bord de la partie plane (136, 136b, 136c, 136e, 136f) dans une direction s'éloignant de la partie surélevée, et les deux parties de support (138) viennent toutes deux en butée contre le module de caméra frontale (140).

5. Dispositif électronique (1000) selon la revendication 3 ou 4, dans lequel le boîtier comprend en outre un cadre intermédiaire (111), le couvercle arrière (112) est disposé sur un côté du cadre intermédiaire (111), le module de caméra frontale (140) et le support (130, 130a-h) sont tous deux disposés sur le cadre intermédiaire (111), le cadre intermédiaire (111) comprend une antenne de cadre intermédiaire (111c), le support (130, 130a-h) comprend une partie de support métallique (133, 133a-f), la partie de support métallique (133, 133a-f) comprend la partie surélevée et la partie plane (136, 136b, 136c, 136e, 136f), et la partie de support métallique (133, 133a-f) et l'antenne de cadre intermédiaire (111c) sont espacées et disposées en regard l'une de l'autre.

6. Dispositif électronique (1000) selon la revendication 5,
dans lequel le module de caméra frontale (140) comprend en outre un ensemble de carte de circuit imprimé (141), le capteur d'image (142) est disposé sur l'ensemble de carte de circuit imprimé (141), l'ensemble de carte de circuit imprimé (141) comprend une plaque de renfort (145), la plaque de renfort (145) est disposée en regard de la partie surélevée, la plaque de renfort (145) est faite d'un matériau métallique, et la fente (137, 137g, 137h) est prévue en regard de l'antenne de cadre intermédiaire (111c).

7. Dispositif électronique (1000) selon la revendication 5 ou 6, dans lequel l'antenne de cadre intermédiaire (111c) est une antenne GPS, et une distance minimale entre la partie de support métallique (133, 133a-f) et l'antenne de cadre intermédiaire (111c) est supérieure ou égale à 3 mm.

8. Dispositif électronique (1000) selon la revendication 7, dans lequel une distance minimale entre un fond de la fente (137, 137g, 137h) et l'antenne de cadre intermédiaire (111c) est supérieure ou égale à 3,2 mm, et une largeur de la fente (137, 137g, 137h) est supérieure ou égale à 2,5 mm et inférieure ou égale à 3,5 mm.

9. Dispositif électronique (1000) selon la revendication 5 ou 6, dans lequel l'antenne de cadre intermédiaire (111c) est une antenne LTE, une antenne GSM, une antenne NR ou une antenne Wi-Fi.

10. Dispositif électronique (1000) selon l'une quelconque des revendications 1 à 9, dans lequel un matériau du couvercle arrière (112) comprend au moins l'un parmi du polyuréthane, de la fourrure ou de la fibre de verre.

11. Dispositif électronique (1000) selon l'une quelconque des revendications 5 à 9, dans lequel le dispositif électronique (1000) comprend en outre un écran d'affichage (300), l'écran d'affichage (300) est disposé sur un côté du cadre intermédiaire (111) tourné à l'opposé du couvercle arrière (112), l'écran d'affichage (300) comprend une partie transmettant la lumière (311), et une surface d'imagerie du module de caméra frontale (140) est disposée en regard de la partie transmettant la lumière (311).

12. Dispositif électronique (1000) selon la revendication 11, dans lequel une épaisseur du dispositif électronique (1000) est supérieure ou égale à 5 mm et inférieure ou égale à 7 mm.

13. Dispositif électronique (1000) selon l'une quelconque des revendications 1 à 10, dans lequel le dispositif électronique (1000) comprend un premier boîtier (110), un deuxième boîtier (210) et un mécanisme de rotation, le mécanisme de rotation est relié entre le premier boîtier (110) et le deuxième boîtier (210), le premier boîtier (110) comprend le couvercle arrière (112), et le module de caméra frontale (140) et le support (130, 130a-h) sont tous deux disposés dans le premier boîtier (110).

14. Dispositif électronique (1000) selon la revendication 13, dans lequel le dispositif électronique (1000) comprend en outre un écran d'affichage (300), l'écran d'affichage (300) comprend une première partie d'affichage (310), une deuxième partie d'affichage (320) et une partie pliable (330), la partie pliable (330) est fixée entre la première partie d'affichage (310) et la deuxième partie d'affichage (320), la première partie d'affichage (310) est disposée dans le premier boîtier (110), la deuxième partie d'affichage (320) est disposée dans le deuxième boîtier (210), et la partie pliable (330) est disposée en regard du mécanisme de rotation ; et
la première partie d'affichage (310) comprend une partie transmettant la lumière (311), et une surface d'imagerie du module de caméra frontale (140) est disposée en regard de la partie transmettant la lumière (311).

15. Dispositif électronique (1000) selon la revendication 14, dans lequel une somme d'épaisseurs du premier boîtier (110) et de la première partie d'affichage (310) est supérieure ou égale à 5 mm et inférieure ou égale à 7 mm.
